# EUROPÄISCHE PATENTANMELDUNG

(11) **EP 1 286 099 A2**
(43) Veröffentlichungstag der Anmeldung: **26.02.2003**
(21) Anmeldenummer: 02015660.0
(22) Anmeldetag: 17.07.2002
(51) Int. Cl.: F16L 37/248, F16L 11/11

(54) **Verbindungsanordnung von Kunstoffwellrohren**

(30) Priorität: 14.08.2001 DE 10139899
(71) Anmelder: FRÄNKISCHE ROHRWERKE, GEBR. KIRCHNER GmbH & Co KG, D-97486 Königsberg (DE)
(72) Erfinder: Neubauer, Tilo, 97486 Königsberg (DE); Schröter, Sören, 96049 Bamberg (DE)
(74) Vertreter: Schwabe - Sandmair - Marx

(57) **Zusammenfassung**

Die Erfindung betrifft eine Verbindung von Kunststoffwellrohren mit einem ersten bevorzugt zylindrischen Rohrkörper (10) und einem zweiten bevorzugt zylindrischen Rohrkörper (38), wobei erfindungsgemäß jeweils ein Anschlussteil (11,40) einem der Rohrkörper zugeordnet ist, wobei ein Anschlussteil (40) eine Eingriffserstreckung (42) und das andere Anschlussteil (11) einen Haltebereich (18,19) umfasst.

## Beschreibung

Die Erfindung betrifft eine Kunststoffwellrohranordnung mit einem ersten bevorzugt zylindrischen Rohrkörper mit quer zu diesem erstreckten Wellungen und mit einem zweiten bevorzugt zylindrischen Rohrkörper mit quer zu dessen Längserstreckungsachse verlaufenden Wellungen, sowie mit einem Anschlussabschnitt zwischen den Körpern, gemäß dem Oberbegriff des Patentanspruchs 1.

Im Stand der Technik ist es bekannt, miteinander zu verbindende Wellrohrenden über Adapter oder dergleichen miteinander zu verbinden. Derartige Verbindungserfordernisse können auftreten, wenn beispielsweise Wellrohre aus unterschiedlichen Werkstoffen aneinander anzuschließen sind. Ferner können derartige Bedürfnisse entstehen, wenn Wellrohre aneinander angeschlossen werden müssen, weil große Längen bzw. Abstände mit Wellrohren zu überbrücken sind, die mit einzelnen Wellrohrgebinden nicht zu bewältigen sind. Auch kann es erforderlich sein, Wasser- bzw. Flüssigkeitsdichte Verbindungen zur Verfügung zu stellen, etwa in Leitungssystemen für Flüssigkeiten oder in Kabelschutzsystemen, wenn die Kabel vor Nässe geschützt werden sollen.

Auch kann es vorkommen, dass lange Kunststoffwellrohre an Bauteile, beispielsweise Schaltschränke, Maschinenabschnitte oder dergleichen angebaut werden sollen.

Die bisherigen Technologien, die auch das Einschießen von Anschlussstutzen oder dergleichen beinhaltet haben, lassen hier in Bezug auf die Einfachheit der Montage, die Teilevielfalt und dementsprechend auch die Kosten sehr zu wünschen übrig. Auch die Dichtigkeit bekannter Systeme ist relativ unzuverlässig.

Es ist demzufolge eine Aufgabe gemäß der vorliegenden Erfindung, eine Kunststoffwellrohranordnung vorzuschlagen, die mit einfachen Mitteln eine zuverlässige dichte Verbindung ermöglicht. Ferner ist es eine Aufgabe gemäß der Erfindung, eine kostengünstigere Verbindungstechnik zur Verfügung zu stellen, insofern Kunststoffwellrohre betroffen sind. Außerdem soll die Teilevielfalt gemäß der Erfindung reduziert werden.

Gemäß der Erfindung wird wenigstens eine dieser Aufgaben wenigstens teilweise durch eine Kunststoffwellrohranordnung mit den Merkmalen des Anspruchs 1 gelöst. Zweckmäßige Ausführungsformen der erfindungsgemäßen Kunststoffwellrohranordnung werden durch die Unteransprüche definiert.

Gemäß der Erfindung beruhen deren Vorteile darauf, dass der Anschlussabschnitt zweiteilig ausgebildet ist, wobei jeweils ein Anschlussteil integral entweder mit dem ersten oder dem zweiten Rohrkörper ausgebildet ist, wobei das eine Anschlussteil eine Eingriffserstreckung aufweist, während das andere Anschlussteil einen Haltebereich umfasst, der die Eingriffserstreckung insbesondere reversibel festhält.

D.h., es wird eine Kunststoffwellrohranordnung vorgeschlagen, die endlos mittels eines Korrugators hergestellt werden kann, wobei an bestimmten, vorgegebenen Stellen, etwa im Bereich der aneinander angrenzend produzierten Anschlussteile, das korrugierte Rohr abgeschnitten wird, um auf diese Weise Kunststoffwellrohre mit integriertem Anschlussabschnitt zur Verfügung zu stellen, derart, dass ohne weitere Teile ein Anschluss von Kunststoffwellrohren aneinander ermöglicht werden kann. Lediglich in dem Fall, dass eine besondere Dichtigkeit dieses Anschlusses erzielt werden soll, kann es erforderlich werden, dass in dem Anschlussbereich ein Dichtelement vorgesehen wird, beispielsweise ein O-Ring, eine Gummimanschette oder dergleichen, um neben der Haltefunktion auch noch eine zusätzliche Dichtfunktion erfüllen zu können, falls die Anschlussteile der erfindungsgemäßen Anordnung selbstständig keine ausreichende Dichtigkeit zur Verfügung stellen können.

Gemäß der Erfindung kann eines der Anschlussteile auch mittels eines Fittings zur Verfügung gestellt werden. D.h., statt dass beide Anschlussteile an Enden von Kunststoffwellrohren vorgesehen sind, kann eines der Anschlussteile in der Form eines Fittings ausgebildet sein, beispielsweise indem dieses durch eine Spritzgusstechnik hergestellt wird. D.h., es kann beispielsweise ein zylindrischer Anschlussfitting mit den Merkmalen ausgebildet sein, die gemäß der Erfindung an einem der Anschlussteile der einander zugeordneten Wellrohrenden vorgesehen sind. Ein solches Fitting kann beispielsweise mit einer Schraubverbindung an einem Bauteil, beispielsweise einem Schaltschrank, festgelegt werden, um das anzuschließende Wellrohr, das den komplementären Anschlussabschnitt aufweist, über diesen Anschlussfitting an dem Bauteil, etwa einem Schaltschrank, festzulegen.

Vorteilhafterweise ist das Anschlussteil mit der Eingriffserstreckung bis hinter die Eingriffserstreckung mit einem Querschnitt bzw. Durchmesser ausgebildet, der es erlaubt, dass das andere Anschlussteil in ersteres aufgenommen werden kann oder durch dieses aufgenommen werden kann. Diese Ausgestaltung ermöglicht einen überlappenden Anschluss, wobei die den mechanisch abgesicherten Anschluss bildenden Komponenten miteinander in Eingriff bringbar sind, d.h., die Eingriffserstreckung gelangt in Eingriff mit dem Haltebereich, wobei gleichzeitig noch umfängliche Bereiche des Anschlussabschnittes anfallen, die für Dichtmaßnahmen geeignet sind.

Andererseits ist es auch von Vorteil, wenn das andere Anschlussteil mit dem Haltebereich mit einem Querschnitt bzw. Durchmesser ausgebildet ist, derart, dass es das eine Anschlussteil aufzunehmen vermag oder durch dieses aufgenommen werden kann. Hiermit sind entsprechende Vorteile verbunden, wie sie in dem vorstehenden Absatz angeführt sind.

Vorteilhafterweise umfasst der Haltebereich einen Gang bzw. eine Kulissenführung oder dergleichen, wobei die Eingriffserstreckung über den Gang, die Kulissenführung oder dergleichen, in eine Halteposition bringbar ist. D.h., die Eingriffserstreckung wird zu Beginn des Ganges bzw. der Kulissenführung oder dergleichen in diesen eingeführt und kann dann entlang dieses Ganges bzw. dieser Kulissenführung in eine Halteposition gebracht werden.

Vorteilhafterweise ist die Halteposition derart ausgebildet, dass diese zu einem Bereich des Ganges, der Kulissenführung oder dergleichen korrespondiert, der wenigstens bereichsweise mehr als 90° aus der axialen Längserstreckungsrichtung des zugeordneten Haltebereichs und/oder des zugeordneten Rohrkörpers herausläuft. Die Eingriffserstreckung funktioniert hier als Kulissenstein, der mit dem Halteabschnitt fix verbunden ist und, sobald dieser über den Gang, die Kulissenführung oder dergleichen, in die Halteposition überführt worden ist, die beiden Rohrenden bzw. das Rohrende mit dem Fitting sicher verbindet. Dadurch, dass der betreffende Gang bzw. die Kulissenführung oder dergleichen mit einem Gang- bzw. Kulissenführungsabschnitt versehen ist, der 90° aus der axialen Längserstreckungsrichtung des zugeordneten Haltebereichs und/oder des zugeordneten Rohrkörpers herausläuft, ist es möglich, durch Eingriff oder Verrasten bzw. Verdrehen der miteinander zu verbindenden Anordnungsbestandteile eine feste Verbindung zu schaffen, die nur durch eine gewollte Einwirkung wieder getrennt werden kann und insofern reversibel ist.

Vorteilhafterweise umfasst der Gang bzw. die Kulissenführung oder dergleichen, einen Hinterschneidungsabschnitt, derart, dass die Eingriffserstreckung hinter die Hinterschneidung einzugreifen vermag, so dass, insofern die Anordnung wieder getrennt werden soll, zunächst die Hinterschneidung zu überwinden ist, bevor die Eingriffserstreckung wieder über den Gang, die Kulissenführung oder dergleichen aus der Halteposition freigegeben werden kann.

Vorteilhafterweise erstreckt sich die Hinterschneidung in Umfangsrichtung und/oder radial. Insofern sich die Hinterschneidung in Umfangsrichtung erstreckt, kann die Eingriffserstreckung über den Gang, die Kulissenführung oder dergleichen durch Drehung hinter die Hinterschneidung gebracht werden, weil eine Federkraft zu überwinden ist, so dass unter normaler Zugeinwirkung auf die erfindungsgemäße Anordnung die Hinterschneidung von der Eingriffserstreckung nicht mehr überwunden werden kann. Entsprechend ist es möglich, die Hinterschneidung radial vorzusehen, so dass die Eingriffserstreckung radial nach innen oder radial nach außen ausgelenkt werden muss, um dann in ihre ursprüngliche radiale Position zurückfedernd in die radiale Hinterschneidung eingreifen zu können. Natürlich ist es möglich, eine Kombination aus radialer und in Umfangsrichtung erstreckter Hinterschneidung zu bilden, beispielsweise für besondere Anordnungserfordernisse.

Falls die erfindungsgemäße Anordnung besonders dicht, etwa flüssigkeitsdicht, ausgebildet werden soll, ist es zweckmäßig, wenigstens eines der Anschlussteile mit einer Dichteinrichtung zu versehen, während das andere Anschlussteil mit einer Dichtfläche in korrespondierender Weise ausgestattet sein sollte. Zum Beispiel kann das eine Anschlussteil mit einer Nut mit einem O-Ring versehen sein und das andere Teil weist eine Dichtfläche auf, an die der O-Ring in der Anschlussposition angepresst wird, um die erfindungsgemäße Anordnung abzudichten.

Vorteilhafterweise können die Anschlussteile zueinander korrespondierend zylindrisch oder konisch ausgebildet sein, wobei insbesondere eine konische Ausbildung dafür sorgen kann, dass in der Anordnungsposition Flächen der Anschlusskonen unmittelbar ohne zusätzliche Dichtmaßnahmen derart ineinander gefügt werden können, dass in sich ohne weitere Dichtmaßnahmen eine ausreichende Dichtwirkung zu erzielen ist. Natürlich können die dichtend aneinander anliegenden Konen auch noch mit zusätzlichen Dichtmaßnahmen versehen werden, etwa mit einer Gummimanschette oder dergleichen, um die Dichtwirkung auch für höhere Drücke gewährleisten zu können.

Besonders bevorzugt ist es, wenn die Anschlussteile zusammen eine Art von Bajonettverschluss bilden, wobei die Wellungen eines Wellrohres besonders dazu geeignet sind, um eine gegebenenfalls nötige Rückstellkraft zur Verfügung zu stellen, um die Eingriffserstreckung des Bajonettverschlusses in einer Halteposition zu halten, solange die Rückstellkraft der Wellrohre nicht aufgebracht wird. In der Regel wirken auf Wellrohre Zugkräfte, während zur Überwindung einer derartigen Rückstellkraft Schubkräfte auf ein Wellrohr wirken müssten, um die nötige Federkraft zu überwinden, die durch die Wellungen eines Wellrohres der erfindungsgemäßen Anordnung aufgebracht wird.

Wird die Erfindung beispielsweise für leicht flüchtige bzw. diffusive Stoffe eingesetzt, insbesondere Kraftstoffe bei Kraftfahrzeugen, kann die Kunststoffwandung aus mehreren Schichten, insbesondere mit Diffusionssperrschicht hergestellt sein.

Gemäß der Erfindung wird es auch bevorzugt, eines der Anschlussteile, oder auch beide an Behältern vorzusehen, die gemäß der Erfindung miteinander zu verbinden sind.

Nachfolgend wir die vorliegende Erfindung unter Bezugnahme auf die beigefügten Figuren näher beschrieben, wobei Vorteile, Merkmale und Zielsetzungen gemäß der Erfindung offenbart werden. Es zeigen:
- Figur 1: eine erste Ausführungsform gemäß der Erfindung in einer teilweise längsgeschnittenen und teilweise seitenansichtlichen Darstellung;
- Figur 1a: einen Querschnitt durch die Ausführungsform gemäß Figur 1 im Bereich der Schnittlinie A-A;
- Figur 2: links ein Wellrohr in einer Seitenansicht, das in ein Wellrohr, das rechts teilweise geschnitten, teilweise seitenansichtlich dargestellt ist, in dessen Anschlussteil einführbar ist;
- Figur 2a: eine axiale Ansicht des Anschlussteils gemäß Figur 2;
- Figur 3: links ein Wellrohr mit einem Anschlussteil in einer Seitenansicht und rechts ein anderes Wellrohr mit korrespondierendem Anschlussteil in einer teils geschnittenen, teils seitenansichtlichen Darstellung; und
- Figur 4: eine Seitenansicht einer erfindungsgemäßen Verbindung, hier zwischen einem Behälter und einem Wellrohr.

In den Figuren sind gleiche oder wenigstens funktionsgleiche Bestandteile mit den gleichen Bezugsziffern gekennzeichnet worden.

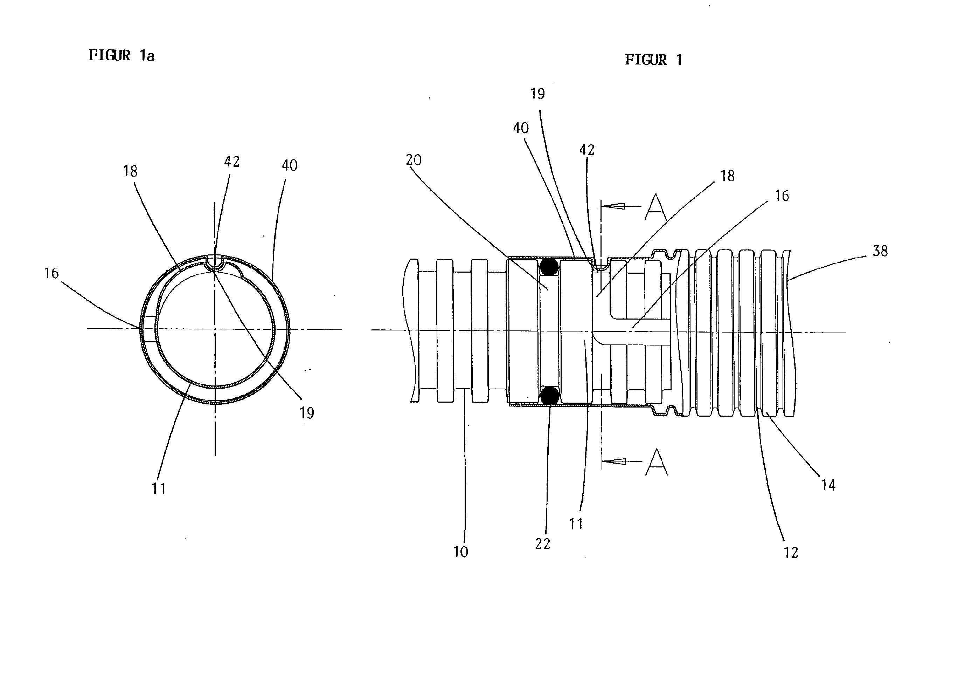

In Figur 1 weist ein Wellrohr 40 ein Anschlussteil 11 gemäß der Erfindung auf, während ein weiteres Wellrohr 10 ein dazu korrespondierendes Anschlussteil 15 umfasst.

Wie zu erkennen ist, sind die Anschlussteile 11, 40 so ausgebildet, dass sie ineinander steckbar sind, wobei im konkreten Ausführungsbeispiel das Anschlussteil 40 in das Anschlussteil 11 eingesteckt wird.

Das Wellrohr 38 weist an seinem Anschlussteil 40 eine Eingriffserstreckung 42 auf, die beim Zusammenfügen der Anordnung über einen Gang 16 und einen Gang 18 in eine radial erstreckte Hinterschneidungsform 19 zum Eingriff bringbar ist. Dabei kann die Eingriffserstreckung 42 und/oder der Hinterschneidungsabschnitt 19 so ausgebildet sein, dass wenigstens eine dem anderen radial ausweicht, was insbesondere aus Figur 1a klar ersichtlich ist.

Der Anschlussabschnitt 11 weist eine Nut 20 auf, in die ein O-Ring 22 eingelegt ist. Die Dichtfläche des O-Rings 22 kommt an der dieser gegenüberliegenden Wandung des Anschlussteils 40 zu liegen, derart, dass eine gute Dichtwirkung entwickelt werden kann.

Gemäß Figur 1a weist das Anschlussteil 40 eine durch Korrugation mit ausgebildete radial einwärts erstreckte Eingriffserstreckung 42 auf, die in einen gleichermaßen durch Korrugation hergestellten Hinterschneidungsabschnitt 19 eingreift.

In dieser querschnittlichen Darstellung ist der Beginn des Zuführungsganges 16 für die Eingriffserstreckung 42 erkennbar. An diesem Gang 16 schließt der Gang 18 an, der so ausgebildet ist, dass dessen Tiefe in Umfangsrichtung zu dem Hinterschneidungsabschnitt 19 hin abnimmt. Hierdurch kann der Anschlussabschnitt 11 in dem Bereich des Ganges bzw. der Kulissenführung 18 nach innen deformiert werden, um dann, wenn Eingriffserstreckung 42 bei den Hinterschneidungsabschnitt 19 angelangt ist, wieder in die ursprüngliche Position zu schnellen, derart, dass die Eingriffserstreckung sicher und fix in den Hinterschneidungsabschnitt 19 zu liegen kommt. Natürlich kann auch das Anschlussteil 40 soweit deformierbar sein, dass dessen Wandung flexibel deformiert wird, so dass die Eingriffserstreckung 42 im Boden des Ganges 18 ausweicht, um dann wiederum durch die flexiblen Rücktriebskräfte in Hinterschneidungsabschnitt 19 einzugreifen.

Da die Bestandteile der erfindungsgemäßen Anordnung aus Kunststoff gefertigt sind, werden in der Realität wahrscheinlich die involvierten Bereiche sowohl des Anschlussteils 11 als auch des Anschlussteils 40 jeweils graduell an dem Ausweichprozess beteiligt sein.

Es braucht nicht weiter betont zu werden, dass natürlich auch umgekehrt der Hinterschneidungsabschnitt an dem außenumfänglichen Anschlussteil 40 vorgesehen sein kann und die Eingriffserstreckung 42 an dem innen befindlichen Anschlussteil 11 ausgebildet sein kann.

Der Festlegungsprozess läuft hier derart ab, dass, wie oben bereits angedeutet, die Eingriffserstreckung 42 in den Gang 16 eingeführt wird, durch eine Drehung eines der Bestandteile der Anordnung in den umfänglich erstreckten Gang 18 eingeführt wird, um dann letztlich in dem Hinterschneidungsabschnitt 19 zu liegen zu kommen. Wenn nun Zugkräfte auf diese Anordnung ausgelegt werden, wirken diese nicht in Richtung der Federkraft, die zwischen dem Hinterschneidungsabschnitt 19 und der Eingriffserstreckung 42 wirkt, so dass ein Öffnen der erfindungsgemäßen Verbindung praktisch unmöglich ist. Gleichermaßen trifft dies auch für Schubkräfte zu, da auch diese nicht radial nach innen wirken.

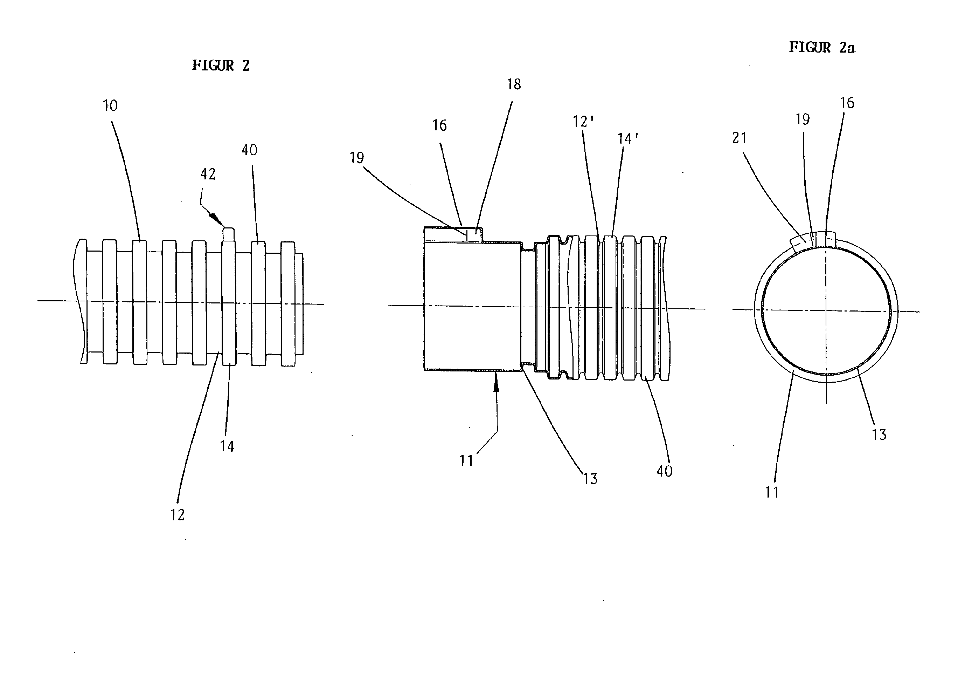

In Figur 2 bzw. Figur 2a ist eine weitere Ausführungsform mit Merkmalen gemäß der Erfindung zu erkennen.

Hier weist ein Wellrohrabschnitt 10 mit Wellenbergen 14 und Wellentälern 12 eine Eingriffserstreckung 42 auf einem der Wellenberge auf. Das gegenüberliegende Wellrohr 40 weist ein Anschlussteil 11 auf, das einen zunächst axial erstreckten Gang 19 umfasst. An dem axial erstreckten Gang 19 schließt ein umfänglich erstreckter Gangabschnitt 18 an, der in einem wiederum im wesentlichen axial erstreckten Abschnitt 21 übergeht, der aus Figur 2a hervorgeht. Zwischen den beiden in Axialrichtung der Rohranordnung erstreckten Gangabschnitten 16 und 21 ist ein Hinterschneidungsabschnitt 19 vorgesehen. Am Ende des Anschlussteils 11 ist ein Anschlagbereich vorgesehen, an dem das Ende des Wellrohres 10 zu liegen kommt.

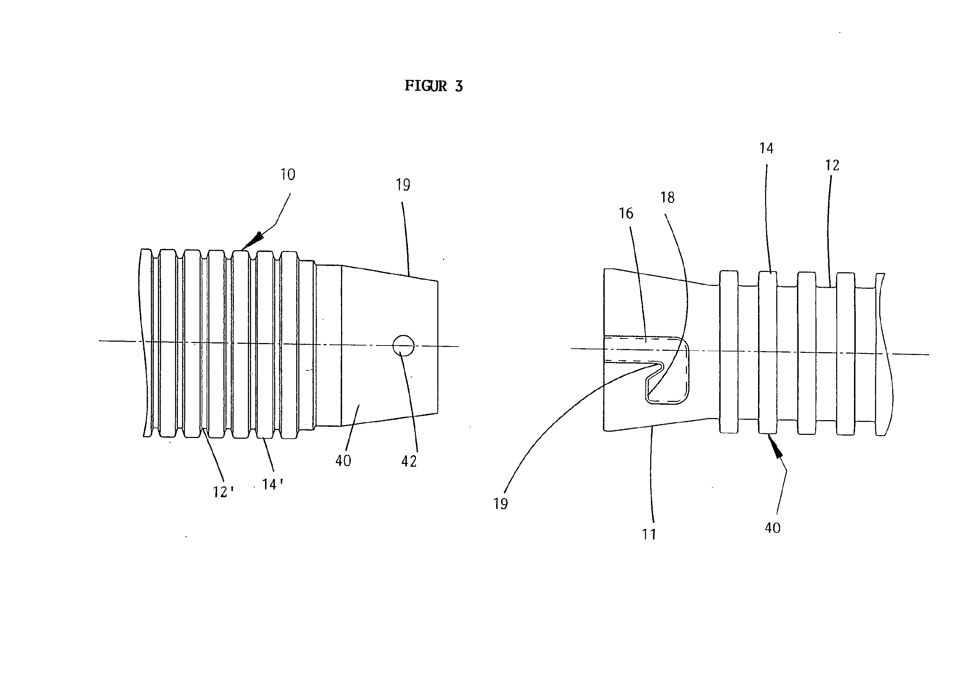

Wenn die beiden Rohre 10, 40 gemäß Figur 2 miteinander verbunden werden sollen, wird das Ende des Rohres 10 in das Anschlussteil 11 eingeführt, wobei die Eingriffserstreckung 42 in den Gang 16 des Anschlussteils 11 hineingleitet. Das Wellrohr 10 gelangt bei diesem Verbindungsprozess in Anlage an den Anschlagbereich 13 und wird während des Verbindungsprozesses zusammengedrückt, was aufgrund der Wellungen ermöglicht wird. Wenn die Eingriffserstreckung 42 an dem Ende des Ganges 16 angelangt ist, muss eine Drehkraft auf eines der beiden Rohre 10, 40 bzw. eines der beiden Anschlussteile 11, 40 ausgeübt werden, so dass die Eingriffserstreckung 42 in den umfänglich erstreckten Gangabschnitt 18 überführt wird. Sobald die Eingriffserstreckung 42 durch den umfänglich erstreckten Gangbereich 18 hindurchgeführt ist, und damit automatisch den Hinterschneidungsabschnitt 19 passiert hat, kann die Kompressionskraft, die während des Verbindungsprozesses auf die daran beteiligten Rohre 10, 40 ausgeübt worden ist, entspannt werden. Hierdurch kann die rücktreibende Federkraft der Wellungen des Wellrohres 10 im Bereich des Anschlussteils 40 die Eingriffserstreckung in den Gangabschnitt 21 hineintreiben, derart, dass ein Lösen der Anordnungsbestandteile durch Zugkräfte nicht mehr bewirkt werden kann, da die Eingriffserstreckung 42 hinter den Hinterschneidungsabschnitt 19 in dem axial erstreckten Gangabschnitt 21 eingefangen ist. Eine Lösung dieser Verbindung ist dann nur noch möglich, indem wiederum eine Schubkraft auf die Anordnungsteile und insbesondere auf das Rohr 10 ausgeübt wird, die die Wellungen im Bereich des Anschlussteils 40 komprimiert. Zu Erkennen ist in Figur 2, wie auch in Figur 1 und auch in Figur 3, dass die miteinander zu verbindenden Wellrohre unterschiedliche Wellungsformen aufweisen können. Natürlich können die Wellrohre auch gleiche Wellungsformen aufweisen. Zu bemerken ist in Bezug auf sämtliche Ausführungsformen, dass, in dem Falle, dass einer der Anschlussteile 11, 40 Bestandteil eines Anschlussfittings ist, dann natürlich beispielsweise noch ein Gewindeabschnitt oder dergleichen anstelle des dargestellten Wellrohres an das betreffende Anschlussteil anschließen kann.

In Figur 3 ist eine Anordnung mit Merkmalen gemäß der Erfindung dargestellt, die prinzipiell genauso ausgebildet ist, wie die Ausführungsform gemäß Figur 2. Abweichend hiervon sind jedoch die Anschlussteile 11, 40 zueinander korrespondierend konisch ausgebildet, so dass die aneinander zur Anlage kommenden konischen Flächen zu gleich Dichtflächen darstellen können, die ausreichend Dichtigkeit zur Verfügung stellen, ohne das weitere Dichtmaßnahmen getroffen werden müssen. Andererseits ist auch möglich, hier beispielsweise eine Gummimanschette mit in diese Anordnung einbeziehen, so dass eine besonders dichte Verbindung herstellbar ist.

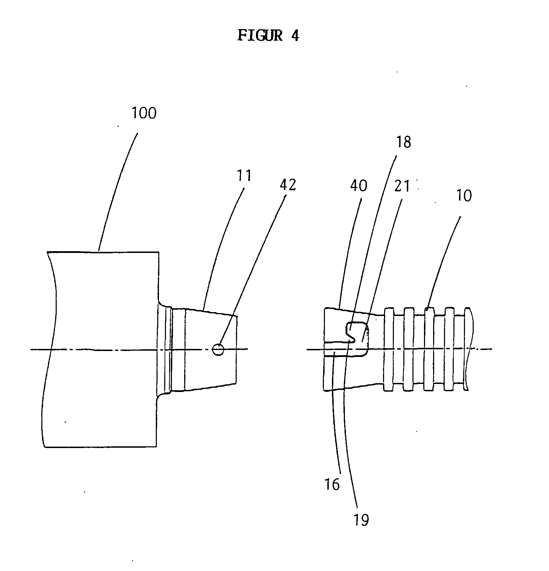

In Figur 4 ist ein Behälter 100 dargestellt, der beispielsweise durch Spritzguss oder dergleichen hergestellt sein kann. Der Behälter ist mit einem Anschlussteil 11 gemäß der Erfindung ausgebildet, das die Eingriffserstreckung 42 aufweist. Der Wellrohrabschnitt 10 mit dem Anschlussteil 40 ist gemäß Figur 3 ausgebildet.

Natürlich kann das Anschlussteil 11 des Behälters 100 auch gemäß eines der oben erwähnten anderen Anschlussteile 11, 40 ausgebildet sein, wobei das jeweils dazu komplementär ausgebildete Anschlussteil an dem anzuschließenden Wellrohr vorgesehen sein sollte.

Auch beide Anschlussteile 11, 40 können natürlich an Behältern 100 vorgesehen sein.

## Patentansprüche

1. Kunststoffwellrohranordnung mit einem ersten, bevorzugt zylindrischen Rohrkörper (10) mit quer zu diesem erstreckten Wellungen (12, 14; 12', 14') und mit einem zweiten, bevorzugt zylindrischen Rohrkörper (10, 10') mit quer zu dessen Längserstreckungsachse verlaufenden Wellungen, sowie mit einem Anschlussabschnitt (11, 40) zwischen den Rohrkörpern, **gekennzeichnet durch** die folgenden Merkmale:
a) der Anschlussabschnitt ist zweiteilig ausgebildet, wobei jeweils ein Anschlussteil (11, 40) hiervon integral entweder mit dem ersten oder dem zweiten Rohrkörper ausgebildet ist;
b) ein Anschlussteil weist eine Eingriffserstreckung (42) auf, während das andere Anschlussteil einen Haltebereich (16, 18, 21) aufweist, der die Eingriffserstreckung insbesondere reversibel hält.

2. Kunststoffwellrohranordnung nach Anspruch 1, **dadurch gekennzeichnet, dass** das Anschlussteil mit der Eingriffserstreckung (42) bis hinter die Eingriffserstreckung mit einem Querschnitt bzw. Durchmesser ausgebildet ist, so dass es das andere Anschlussteil aufzunehmen vermag oder durch dieses aufnehmbar ist.

3. Kunststoffwellrohranordnung nach Anspruch 1, **dadurch gekennzeichnet, dass** das andere Anschlussteil mit dem Haltebereich (16, 18, 21) mit einem Querschnitt bzw. Durchmesser ausgebildet ist, so dass es das eine Anschlussteil aufzunehmen vermag oder durch dieses aufnehmbar ist.

4. Kunststoffwellrohranordnung nach einem der Ansprüche 1 bis 3, **dadurch gekennzeichnet, dass** der Haltebereich einen Gang bzw. eine Kulissenführung oder dergleichen (16, 18, 21) umfasst, wobei die Eingriffserstreckung über den Gang, die Kulissenführung oder dergleichen in eine Halteposition bringbar ist.

5. Kunststoffwellrohranordnung nach Anspruch 4, **dadurch gekennzeichnet, dass** die Halteposition zu einem Bereich des Ganges, der Kulissenführung oder dergleichen korrespondiert, der wenigstens bereichsweise mehr als 90° aus der axialen Längserstreckungsrichtung des zugeordneten Haltebereichs und/oder des zugeordneten Rohrkörpers herausläuft.

6. Kunststoffwellrohranordnung nach einem der Ansprüche 4 oder 5, **dadurch gekennzeichnet, dass** der Gang, die Kulissenführung oder dergleichen einen Hinterschneidungsabschnitt (19) aufweist.

7. Kunststoffwellrohranordnung nach Anspruch 6, **dadurch gekennzeichnet, dass** die Hinterschneidung in Umfangsrichtung und/oder radial erstreckt ist.

8. Kunststoffwellrohranordnung nach einem der Ansprüche 1 bis 7, **dadurch gekennzeichnet, dass** wenigstens einer der Anschlussteile eine Dichteinrichtung (22), etwa einen O-Ring, umfasst.

9. Kunststoffwellrohranordnung nach einem der Ansprüche 1 bis 8, **dadurch gekennzeichnet, dass** die Anschlussteile zueinander korrespondierend zylindrisch oder konisch ausgebildet sind.

10. Kunststoffwellrohranordnung nach Anspruch 9, **dadurch gekennzeichnet, dass** im Falle zueinander korrespondierender konischer Anschlussabschnitte glatte, einander zugewandte Flächen der Konen dichtend wirken.

11. Kunststoffwellrohranordnung nach einem der Ansprüche 1 bis 10, **dadurch gekennzeichnet, dass** die Anschlussabschnitte einen Bajonettverschluss bilden.

12. Kunststoffwellrohranordnung nach einem der Ansprüche 1 bis 11, **dadurch gekennzeichnet, dass** entweder das eine oder das andere Anschlussteil an einem Wellrohr vorgesehen ist, während das jeweilig andere Anschlussteil als Fitting, etwa als Kunststoffspritzgussteil, ausgebildet ist.

13. Kunststoffwellrohranordnung nach einem der Ansprüche 1 bis 11, **dadurch gekennzeichnet, dass** entweder das eine oder das andere Anschlussteil an einem Wellrohr vorgesehen ist, während das jeweilige andere Anschlussteil (11) an einem Behälter (100) vorgesehen ist.

14. Kunststoffwellrohranordnung nach einem der Ansprüche 1 bis 11, **dadurch gekennzeichnet, dass** sowohl das eine als auch das andere Anschlussteil an einem Behälter (100) vorgesehen ist.
